# EUROPÄISCHE PATENTANMELDUNG

(11) **EP 1 387 202 A2**
(43) Veröffentlichungstag der Anmeldung: **04.02.2004**
(21) Anmeldenummer: 03015848.9
(22) Anmeldetag: 11.07.2003
(51) Int. Cl.: G02B 21/06, G02B 21/00

(54) **Objektiv mit Beleuchtung**

(30) Priorität: 03.08.2002 DE 10235706
(71) Anmelder: Leica Microsystems (Schweiz) AG, 9435 Heerbrugg (CH)
(72) Erfinder: Sander, Ulrich, Dr., 9445 Rebstein (CH)
(74) Vertreter: Reichert, Werner F., Dr.

(57) **Zusammenfassung**

Die Erfindung betrifft ein Objektiv mit Beleuchtung - insbesondere für die Anwendung in einem Stereo-Operationsmikroskop - mit einem als Hauptobjektiv verwendeten mehrteiligen Objektiv (8), das in einen Objektivteil (10a) für die Beobachtung und einen zweiten Objektivteil (10b) für die Beleuchtung getrennt ist, wobei der Objektivteil (10b) für die Beleuchtung aus dem Objektiv (8) entfernt ist und in einem Winkel zur optischen Achse (1) des Objektivs (8) angeordnet ist.

## Beschreibung

Die Erfindung betrifft ein Objektiv mit Beleuchtung, insbesondere für die Anwendung als Hauptobjektiv in einem Stereo-Operationsmikroskop oder bei anderen optischen Instrumenten.

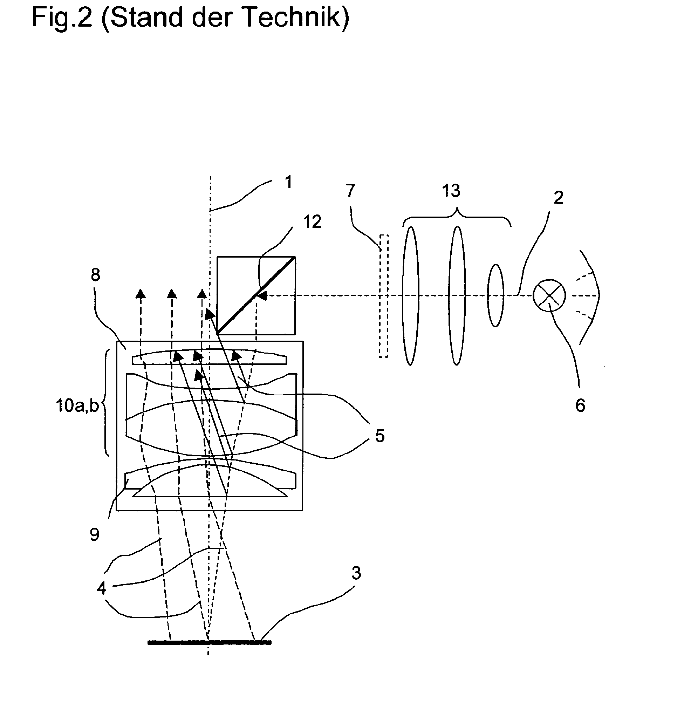

Bei herkömmlichen Operationsmikroskopen mit einem Hauptobjektiv, einem Zoom, einem Tubus mit Okularen und einer eingebauten Beleuchtung für ein Objektfeld erfolgt die Beleuchtungseinkoppelung in den Hauptstrahlengang des Mikroskops üblicherweise zwischen Hauptobjektiv und Zoom mittels eines Umlenkelementes, beispielsweise eines Prismas, vergleiche Fig. 2. Das Hauptobjektiv ist üblicherweise eine hochwertige, aus mehreren Linsengruppen aufgebaute Optik, die zunehmend komplexer wird, da immer höhere Abbildungsleistungen verlangt werden und ein Trend zu verschiebbaren Linsengruppen zur Veränderung der Brennweite besteht.

Dadurch, dass die Beleuchtungsstrahlenbündel oberhalb des Hauptobjektivs eingekoppelt werden, durchstrahlen sie entsprechend der Beleuchtungsapertur alle Linsengruppen des Hauptobjektivs. Dies kann an den Oberflächen der einzelnen optischen Elemente des Hauptobjektivs (Linsengruppen) zu unerwünschten Reflexionen führen, die in den Beobachtungsstrahlengang reflektiert werden.

Methoden zur Reduktion unerwünschter Reflexionen der Beleuchtungsstrahlenbündel in den Beobachtungsstrahlengang im Hauptobjektiv werden unter anderem auch in den Dokumenten DE-A1-195 23 712, DE-A1-197 39 428, DE-A1-29 32 486 sowie DE-A1-34 27 5 92 beschrieben. Folgende Möglichkeiten sind daraus bekannt:
Teilung des Objektivs und Einsatz einer trennenden Abdeckblende;
Durchbruch im Hauptobjektiv mit zusätzlichen, zuklappbaren, optischen Elementen;
eigene, vom Beobachtungsstrahlengang getrennte, optische Elemente für die Beleuchtung.

Bei diesen bekannten Lösungen ist analog zu der eingangs beschriebenen Standard-Lösung charakteristisch, dass die Beleuchtungsstrahlenbündel oberhalb des meist aus mehreren Linsengruppen bestehenden Hauptobjektivs eingekoppelt werden.

Der Erfinder erkannte, dass diese Systeme nachteilig sind in Bezug auf die folgenden Punkte:

Der Trend zu komplexen, teilweise mit variabler Brennweite versehenen Hauptobjektiven führt zu einer Vielzahl von Linsengruppen und damit Grenzflächen im Hauptobjektiv mit der Folge, dass störende Reflexe durch die Beleuchtungsstrahlenbündel in den Beobachtungsstrahlengang gelangen und damit eine Verschlechterung der Abbildungsqualität verursacht wird.

Durch die Einspiegelung der Beleuchtungsstrahlenbündel oberhalb des Hauptobjektivs ergibt sich eine unerwünscht große Bauhöhe.

Die in den zitierten Schriften offenbarten Lösungsansätze sind bezüglich der optisch-mechanischen Justierung aufwändig und erfordern zusätzliche, sich vom Hauptobjektiv stark unterscheidende optische Elemente.

Aufgabe der Erfindung ist es nun, ein Objektiv mit Beleuchtung-insbesondere als Hauptobjektiv für Operationsmikroskope - zu schaffen, welches unter den Gesichtspunkten hoher Abbildungsqualität und insbesondere einer geringen Bauhöhe eine größtmögliche Reflexfreiheit im Beobachtungsstrahlengang gewährleistet.

Gelöst wird diese Aufgabe durch die im Patentanspruch 1 aufgeführten Merkmale. Weitere Ausgestaltungen ergeben sich aus den Unteransprüchen.

Anhand von Figuren wird die Erfindung nachfolgend näher erläutert. Es zeigen in schematischer Aufstellung:
- Fig.1:: den Aufbau eines Objektivs mit einer erfindungsgemäßen Beleuchtungseinkoppelung;
- Fig.1a:: die Aufteilung der Frontlinsengruppe des Objektivs in die Frontlinsengruppenteile für die Beobachtung beziehungsweise für die Beleuchtung;
- Fig.2:: den Aufbau einer herkömmlichen Beleuchtungseinkoppelung oberhalb des Hauptobjektivs;
- Fig. 3a bis 3c:: Varianten des Umlenkelements mit verschiedenartig gewölbter Umlenkfläche beziehungsweise Ein- und Austrittsflächen;
- Fig. 4:: eine Variante der erfindungsgemäßen Beleuchtungseinkoppelung mit einem Umlenkelement, das in der Ebene der Frontlinsengruppe für die Beobachtung angeordnet ist, und
- Fig. 5:: die mittels einer Abdeckung optisch entkoppelten Frontlinsengruppenteile.

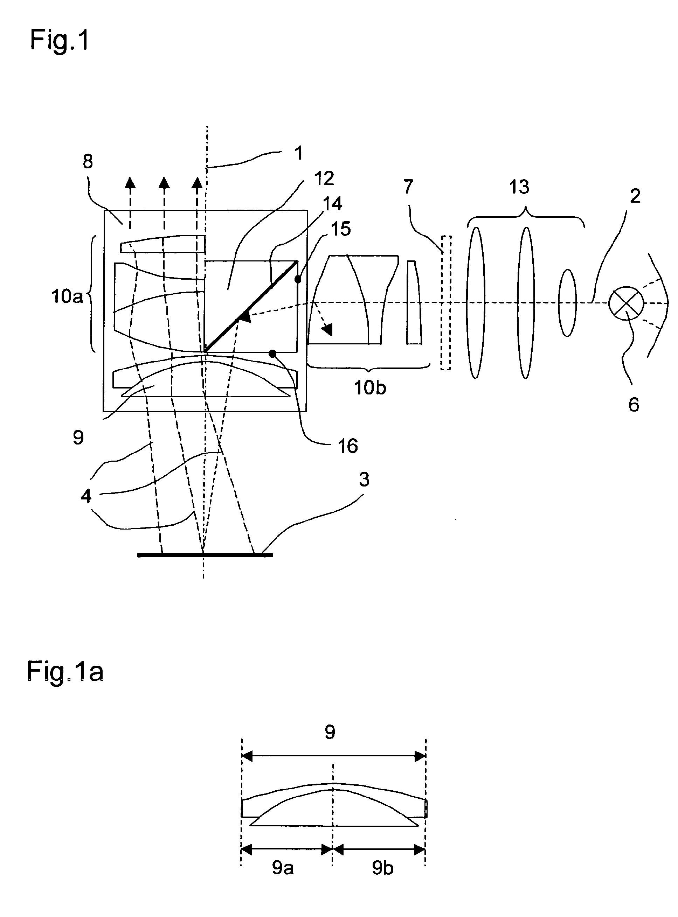

Fig.1 zeigt den Aufbau eines Objektivs 8 mit einer erfindungsgemäßen Beleuchtungseinkoppelung. Dabei ist eine optische Achse 1 des Objektivs 8, ein Beleuchtungsstrahlengang 2, ein Objektfeld 3, eine Frontlinsengruppe 9 des Objektivs 8, ein Objektivteil 10a für die Beobachtung, ein Objektivteil 10b für die Beleuchtung, ein Umlenkelement 12 für die Beleuchtung mit einer Umlenkfläche 14 sowie Ein- und Austrittsfläche 15 und 16, eine Beleuchtungsoptik 13, eine Lichtquelle 6 mit Reflektor sowie stilisiert eine Blende/Display 7 dargestellt.

Das von der Lichtquelle 6 erzeugte Licht wird über die Beleuchtungsoptik 13 auf den Objektivteil 10b für die Beleuchtung auf das Umlenkelement 12, beispielsweise einen Spiegel oder ein Prisma, geführt. Das Umlenkelement 12 umfasst eine Umlenkfläche 14, eine Eintrittsfläche 15 und eine Austrittsfläche 16. Das vom Umlenkelement 12 umgelenkte Licht wird über die Frontlinsengruppe 9 des Objektivs 8 auf das Objektfeld 3 geleitet. Das am Objektfeld 3 reflektierte Licht wird als Beobachtungsstrahlengang 4 über die Frontlinsengruppe 9 des Objektivs 8 auf den Objektivteil 10a für die Beobachtung geführt und von dort aus weiter auf die nicht dargestellten nachfolgenden optischen Elemente des Mikroskops wie Zoom, Tubus und Okular geleitet.

Aus Fig. 1 ist ersichtlich, dass der Beleuchtungsstrahlengang 2 strikt getrennt vom Beobachtungsstrahlengang 4 geführt wird, so dass unerwünschte Reflexionen 5 vom Beleuchtungsstrahlengang 2 in den Beobachtungsstrahlengang 4 vermieden werden. Außerdem ist ersichtlich, dass der Objektivteil 10b für die Beleuchtung dem abgetrennten Objektivteil 10a für die Beobachtung entspricht. Damit wird die gleiche Abbildungsqualität sowohl für die Beleuchtung als auch für die Beobachtung erreicht.

Fig. 1a zeigt die Aufteilung der Frontlinsgruppe 9 in die Frontlinsengruppenteile 9a für die Beobachtung beziehungsweise 9b für die Beleuchtung.

Fig. 2 zeigt analog zu Fig. 1 den Aufbau einer herkömmlichen Beleuchtungseinkoppelung. Dabei wird der Beleuchtungsstrahlengang 2 über ein oberhalb des Objektivs 8 gelegenes Umlenkelement 12 in das Objektiv 8 geleitet. Durch die Beleuchtung entstehen an den verschiedenen Linsengruppen im Objektiv 8 Reflexionen 5, die in den Beobachtungsstrahlengang 4 gelangen und diesen verschlechtern.

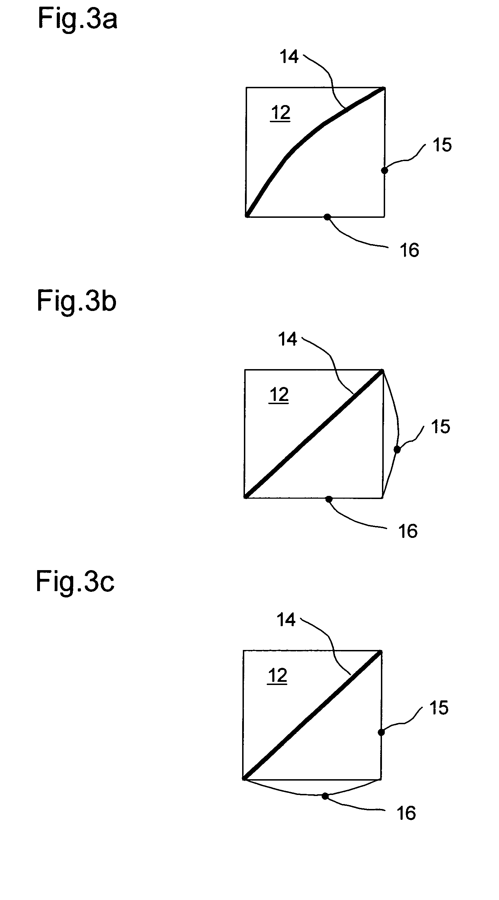

Die Fig. 3a bis 3c zeigen Varianten des Umlenkelements 12 mit verschiedenartig gewölbter Umlenkfläche 14 beziehungsweise Ein- und Austrittsflächen 15 und 16. Mittels dieser beispielsweise konkav oder konvex gekrümmten Flächen 14, 15, 16 werden unterschiedliche optische Eigenschaften (Brennweiten) des Umlenkelements erreicht.

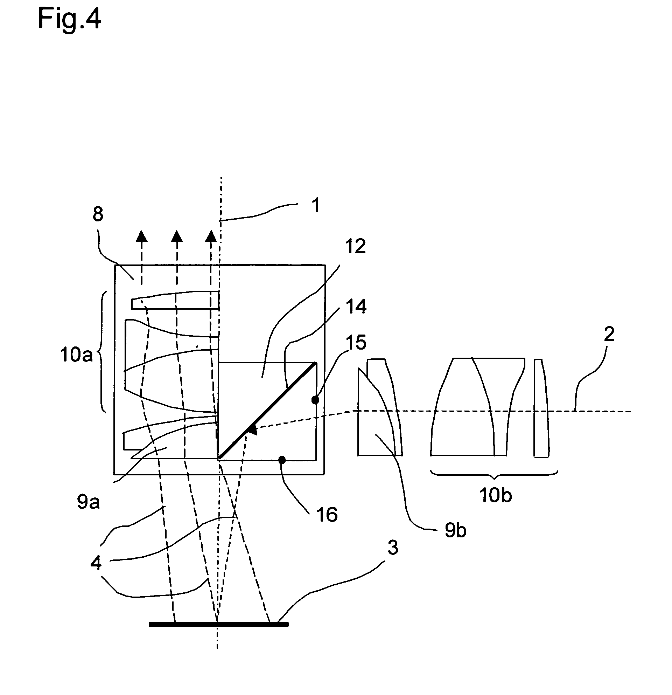

Fig. 4 zeigt eine Variante der erfindungsgemäßen Beleuchtungseinkoppelung mit anders angeordnetem Umlenkelement 12. Dabei wird der Frontlinsengruppenteil 9b für die Beleuchtung aus dem Objektiv 8 entfernt und anstelle dieses das Umlenkelement 12 auf der gleichen Ebene wie der Frontlinsengruppenteil 9a für die Beobachtung eingesetzt. Der Frontlinsengruppenteil 9b für die Beleuchtung wird, um eine unveränderte Beleuchtungsoptik wie die erfindungsgemäße zu erreichen, in den Beleuchtungsstrahlengang 2 außerhalb des Objektivs 8 eingesetzt.

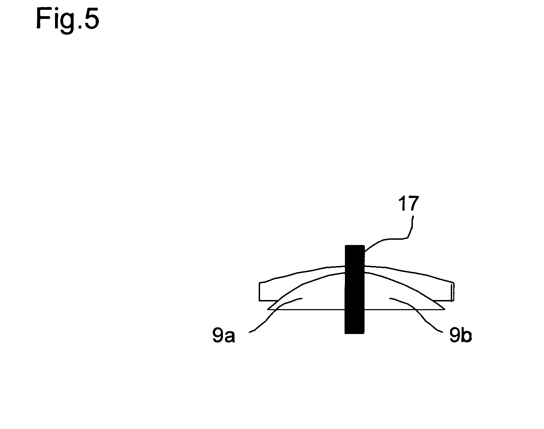

Fig. 5 zeigt mittels einer Abdeckung 17 optisch entkoppelte Frontlinsengruppenteile 9 und 9a. Dabei wird eine Abdeckung 17 zwischen den Frontlinsengruppenteil 9a für die Beobachtung und den Frontlinsengruppenteil 9b für die Beleuchtung eingesetzt.

Das aus mehreren Linsengruppen zusammengesetzte Objektiv 8, dessen dem Objektfeld 3 zugewandter Teil die Frontlinsengruppe 9 des Objektivs 8 bildet, wird mit Ausnahme dieser Frontlinsengruppe 9 in zwei Teile beliebiger Form getrennt. Der eine Teil wird für den Beobachtungsstrahlengang 4, der andere Teil für den Beleuchtungsstrahlengang 2 verwendet. Der Objektivteil 10a für die Beobachtung bleibt an seinem angestammten Platz; der Objektivteil 10b für die Beleuchtung wird aus dem ursprünglichen Objektivsystem herausgenommen und der Lichtquelle 6 mit Reflektor (Beleuchtung) zugeordnet. Die Achse dieses Objektivteils 10b für die Beleuchtung steht nun beispielsweise senkrecht zur optischen Achse 1 des ursprünglich ungeteilten Objektivs 8.

Um den Beobachtungsstrahlengang 4 und den Beleuchtungsstrahlengang 2 wieder zusammen zu führen, wird ein Umlenkelement 12 - beispielsweise ein Prisma oder ein Spiegel - an der Stelle eingesetzt, an der bislang der Objektivteil 10b für die Beleuchtung war.

Der Beobachtungsstrahlengang 4 wird somit auch weiterhin durch den unveränderten Objektivteil 10a für die Beobachtung geleitet. Der Beleuchtungsstrahlengang 2 wird erfindungsgemäß direkt über der Frontlinsengruppe 9 eingekoppelt. Der abgetrennte Objektivteil 10b für die Beleuchtung, obwohl beispielsweise senkrecht zur optischen Achse 1 des ursprünglichen Objektivs 8 angeordnet, wird wie bisher zur Abbildung des Objektfeldes 3 benutzt. Damit wird durch den komplexen Aufbau des für die Beleuchtung abgetrennten Objektivteils 10b für die Beleuchtung eine entsprechend hohe Korrektur des Beleuchtungsstrahlengangs 2 erreicht. Dabei ist zu beachten, dass der jetzt vergrößerte Luftabstand und der Glasweg im Umlenkelement 12 in die Korrektur des Beleuchtungsstrahlengangs 2 einfließen sollte, entweder in eine veränderte Korrektur des Objektivteils 10b für die Beleuchtung oder in die Wahl der noch zusätzlich verwendeten Beleuchtungsoptik 13.

In der Beleuchtungsoptik 13 können gemäß einer Weiterentwicklung der Erfindung zusätzlich axial und radial verschiebbare Blenden und/oder Displays 7 eingebaut sein.

Als Weiterentwicklung der Erfindung können auch verschiebbare Linsengruppen im Objektivteil 10b für die Beleuchtung angewendet werden, entsprechend der Auslegung des ursprünglichen Objektivs 8.

Durch die vorliegend beschriebene erfindungsgemäße Beleuchtungseinkoppelung werden die folgenden Verbesserungen erreicht:
Geringere Bauhöhe gegenüber herkömmlichen Systemen;
verbesserte optische Abbildungsqualität der Beleuchtung gegenüber bisherigen einfacheren Beleuchtungssystemen;
verbesserte optische Abbildungsqualität von Blenden und/oder Displays, die in den Beleuchtungsstrahlengang eingebaut sind;
Reflexe von den Oberflächen der Objektivlinsen des Beleuchtungsstrahlengangs gelangen nicht mehr in den Beobachtungsstrahlengang, da der Beobachtungsstrahlengang und der Beleuchtungsstrahlengang strikt voneinander getrennt geführt werden;
vereinfachte Herstellung der optischen Elemente der Beleuchtungsoptik im Falle der Anwendung der gleichen optischen Elemente wie im Beobachtungsstrahlengang;
zusätzliche Prismen oder Umlenkelemente sind zur Justierung des Leuchtfeldes nicht mehr erforderlich;
durch die Beibehaltung der gemeinsamen Frontlinsengruppe des Hauptobjektivs wird das Mikroskopsystem in idealer Weise abgeschlossen.

Die Anwendung der Erfindung ist nicht beschränkt auf Stereomikroskope, sondern kann sowohl bei einfacheren Mikroskopen oder auch vergleichbaren Geräten mit einer Beleuchtung durch ein Objektiv angewendet werden.

### Bezugszeichenliste

- 1: optische Achse von (8)
- 2: Beleuchtungsstrahlengang
- 3: Objektfeld
- 4: Beobachtungsstrahlengang
- 5: Reflexion(en) in (4)
- 6: Lichtquelle mit Reflektor
- 7: Blende/Display
- 8: Objektiv
- 9: Frontlinsengruppe von (8)
- 9a: Frontlinsengruppenteil für die Beobachtung
- 9b: Frontlinsengruppenteil für die Beleuchtung
- 10a: Objektivteil für die Beobachtung
- 10b: Objektivteil für die Beleuchtung
- 12: Umlenkelement
- 13: Beleuchtungsoptik
- 14: Umlenkfläche von (12)
- 15: Eintrittsfläche von (12)
- 16: Austrittsfläche von (12)
- 17: Abdeckung

## Patentansprüche

1. Objektiv mit Beleuchtung - insbesondere für die Anwendung als Hauptobjektiv in einem Stereo-Operationsmikroskop mit einem mehrteiligen Objektiv (8), das in einen Objektivteil (10a) für die Beobachtung und einen zweiten Objektivteil (10b) für die Beleuchtung getrennt ist, **dadurch gekennzeichnet, dass** der Objektivteil (10a) für die Beleuchtung aus dem Objektiv (8) entfernt ist und in einem Winkel zur optischen Achse (1) des Objektivs (8) angeordnet ist.

2. Objektiv nach Anspruch 1, **dadurch gekennzeichnet, dass** der Beleuchungsstrahlengang (2) mittels eines direkt über der Frontlinsengruppe (9) des Objektivs (8) angebrachten Umlenkelements (12) in den Strahlengang des Mikroskops eingekoppelt ist.

3. Objektiv nach Anspruch 2, **dadurch gekennzeichnet, dass** wenigstens eine der Flächen: Umlenkfläche (14), Eintrittsfläche (15), Austrittsfläche (16) des Umlenkelements (12) gekrümmt beziehungsweise konvex oder konkav ausbildbar ist.

4. Objektiv nach einem der vorhergehenden Ansprüche, **dadurch gekennzeichnet, dass** Abweichungen in der optischen Korrektion durch veränderte Luftabstände und/oder Glaswege des Umlenkelements (12) durch eine Veränderung des Objektivteils (10a) für die Beleuchtung und/oder durch die zusätzliche Beleuchtungsoptik (13) und/oder wenigstens eine gekrümmte Fläche (Umlenkfläche (14), Eintrittsfläche (15), Austrittsfläche (16) des Umlenkelements (12)) korrigiert sind.

5. Objektiv nach einem der vorhergehenden Ansprüche, **dadurch gekennzeichnet, dass** in der optischen Achse (1) des Objektivs (8) verschiebbare optische Elemente im Objektivteil (10a) für die Beobachtung eine Lageveränderung der korrelierten optischen Elemente im Objektivteil (10b) für die Beleuchtung in der Achse des Beleuchtungsstrahlengangs (2) bewirken.

6. Objektiv nach Anspruch 5, **dadurch gekennzeichnet, dass** die Koppelung der zum Beobachtungsstrahlengang (4) korrelierten optischen Elemente im Beleuchtungsstrahlengang (2) über eine mechanische und/oder elektromechanische und/oder elektronische Koppelung erfolgt.

7. Objektiv nach einem der vorhergehenden Ansprüche, **dadurch gekennzeichnet, dass** die Frontlinsengruppe (9) des Objektivs (8) in zwei Frontlinsengruppenteile (9a) für die Beobachtung und (9b) für die Beleuchtung durchtrennt und optisch vom Beobachtungsstrahlengang (4) entkoppelt ist.

8. Objektiv nach Anspruch 7, **dadurch gekennzeichnet, dass** die Entkoppelung eine Abdeckung (17) umfasst.

9. Objektiv nach Anspruch 7 oder 8, **dadurch gekennzeichnet, dass** der Frontlinsengruppenteil (9b) für die Beleuchtung dem Objektivteil (10b) für die Beleuchtung zugeordnet ist und das Umlenkelement (12) in einer Ebene mit dem Frontlinsengruppenteil (9a) für die Beobachtung angeordnet ist.

10. Objektiv nach einem der vorhergehenden Ansprüche, **dadurch gekennzeichnet, dass** die Trennung des Objektivs (8) in einen Objektivteil (10a) für die Beobachtung und einen Objektivteil (10b) für die Beleuchtung in einer von der Halbierung abweichenden Form erfolgt.
